Europäisches Patentamt

European Patent Office

Office européen des brevets

(11) Publication number: **0 036 424**
**B1**

# EUROPEAN PATENT SPECIFICATION

(45) Date of publication of patent specification: **12.03.86**

(21) Application number: **80901888.0**

(22) Date of filing: **02.10.80**

(86) International application number:
**PCT/HU80/00004**

(87) International publication number:
**WO 81/01084 16.04.81 Gazette 81/09**

(51) Int. Cl.⁴: **H 02 P 7/42, H 03 K 7/08, H 03 K 17/00**

(54) CIRCUIT ARRANGEMENT FOR AN ASYNCHRONOUS MOTOR DRIVE WITH VARIABLE SPEED.

(30) Priority: **02.10.79 HU G0001459**

(43) Date of publication of application:
**30.09.81 Bulletin 81/39**

(45) Publication of the grant of the patent:
**12.03.86 Bulletin 86/11**

(84) Designated Contracting States:
**AT CH DE FR GB LI NL**

(56) References cited:
FR-A-1 466 783
FR-A-1 532 967
FR-A-1 597 584
FR-A-2 218 692
JP-B-53 016 667
SU-A- 159 197
SU-A- 176 606
SU-A- 530 407
SU-A- 587 583
SU-A- 731 575
SU-A- 754 628
US-A-2 912 634
US-A-3 538 458
US-A-3 848 176

The file contains technical information
submitted after the application was filed and
not included in this specification

(73) Proprietor: **VASIPARI KUTATO ES FEJLESZTÖ VALLALAT**
**Fehérvári ut 130**
**H-Budapest 1116 (HU)**

(72) Inventor: **GYÖRGYI, Viktor**
**Fö utca 46**
**H-8086 Felcsut (HU)**

(74) Representative: **Gold, Tibor Zoltán et al**
**T.Z. GOLD & COMPANY, 9 Staple Inn**
**High Holborn**
**London WC1V 7QH (GB)**

(56) References cited:
V.N. Brodovsky i E.S. Ivanov "Privody s
Chastichno-tokovym upravleniem", pupl. in
1974, Publishing House "Energia" (Moscow),
pages 42, 50

Elektronnaya tekhnika v avtomatike, vyousk N
9: publ. in 1977 (Moscow), Y.I. Konev, Y.I. Rozio
and O.E. Bochkarev. "Svoistva
beskollektornogo dvigatelya pri pitanii ego ot
trekhfaznogo istochnika toka", pages 208-214

Courier Press, Leamington Spa, England.

# Description

The invention relates to a circuit arrangement for an asynchronous motor drive with variable speed, in which the effective supply of the motor is adjusted according to the predetermined characteristic of the motor when the motor speed is varied and the torque of the motor is at least partially compensated if the load is varied. This circuit arrangement is of the type including a DC voltage source, a controllable chopper, a three-phase inverter with respective phase control inputs and a DC input coupled to the source by the chopper for driving the motor, a three-phase pulse generator generating control pulses for the inverter with variable repetition frequency, transducer means supplying a signal proportional to the motor current, and a circuit including a pulse width modulator and controlled by the current signal by which the speed and load compensation is made.

It is well known in the art that asynchronous motors are more reliable and economic in several aspects than DC motors in which the commutators require more maintenance.

For applications in which the asynchronous motors operate with varying speed and load, electronic driving units are used which provide the motor with the appropriate electrical supply associated with the actual speed and load values.

US—A—3,848,176 relates to an electronic driving unit of the kind described hereinabove. In this patent, a chopper is driven by a pulse train derived by the pulses of a pulse generator, which pulses, after an appropriate division, determine the speed of the motor. The control of the chopper is also influenced by a feedback circuit including an integrator simulating the effective flux value prevailing in the motor during one cycle and this integrated value is compared to a preset value in order to block the "on" periods of the chopper when the two values becomes equal.

This driving unit has a rather sophisticated design, in which a checking circuit is used for preventing the operation if the pulse frequency falls beyond the normal range of operation. In addition to the complicated circuitry, load compensation requires the exact setting of a number of potentiometers in order that the simulation be as accurate as possible, which requires a certain amount of skill and the possibility of incorrect settings cannot be assuredly excluded. A further drawback of such a motor drive lies in that as a result of the control only the effective DC supply voltage applied to the inverter is adjusted, i.e. the duration and sequence of the thyristor pulses in the inverter remain unchanged. This fact limits the steepness and effectivity of the motor control which, at lower speeds, when uneven running is often experienced, leads to appreciable problems.

An object of the present invention is to provide an improved motor drive, which not only comprises a significantly simpler circuit design but also provides for a more effective speed and load control and which, in addition to changing the DC drive of the inverter, can adjust the effective thyristor pulses of the inverter.

The invention accordingly consists in a circuit arrangement for the asynchronous motor drive of the above-mentioned kind defined; the essence of the invention is that said pulse width modulator includes a resistor, a pulse transformer and a controlled semiconductor switch; and that said transformer consists of a primary coil connected between said resistor and said switch, a secondary coil and a biasing coil, said coils being wound around a saturable core; said biasing coil being fed by said current signal, a clock delivering pulses forming portions of said control pulses for said switch, the control input of the chopper and/or the phase control input(s) of the inverter being coupled to the seconary coil of the pulse transformer.

Further preferred characteristics and details of the invention will be described in connection with preferred embodiments illustrated in the accompanying drawings, wherein:

Figure 1 shows a pulse width modulator system for use in an asynchronous motor drive circuit arrangement in accordance with a preferred embodiment of the invention;

Figure 2 is a schematic block diagram of a complete three-phase drive circuit incorporating three pulse-width modulators shown in Figure 1;

Figure 3 is a pulse timing diagram for the drive circuit shown in Figure 2;

Figure 4 shows the heavy current DC drive circuit arrangement using two pulse-width modulators of the kind shown in Figure 1;

Figure 5 is a block diagram of the control circuit for a chopper that forms part of the arrangement of Figure 4; and .

Figure 6 shows the input waveforms of the two pulse-width modulators of Figure 5.

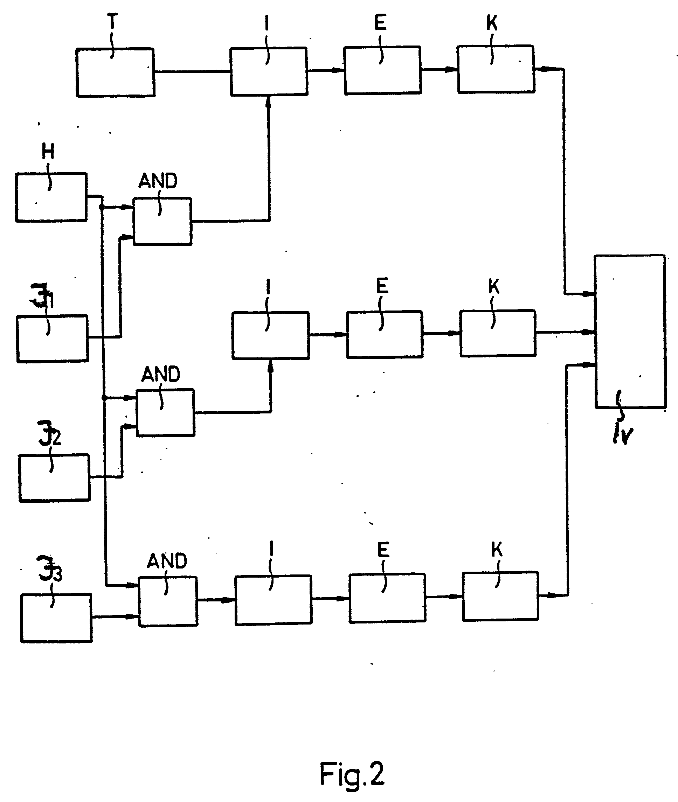

Referring to the Figures, the input terminals of a potentiometer P are connected to a D.C. supply unit T, one pole of which (here the negative pole) is earthed. The slider of the potentiometer P is connected to the input of a pulse-width modulator I (see Figure 2) constituted by a resistor $R_1$, a pulse transformer $L_1$ and a transistor $T_1$.

The pulse transformer $L_1$ comprises a primary coil connected in series between the resistor $R_1$ and the emitter-collector path of the transistor $T_1$; a secondary winding one terminal of which is earthed while its other terminal forms the output of the pulse transformer $L_1$; and finally, a biasing coil $E_1$ wound around an iron core.

The terminals of the biasing coil $E_1$ are connected to receive a current signal proportional to the current flowing in a squirrel-cage motor M.

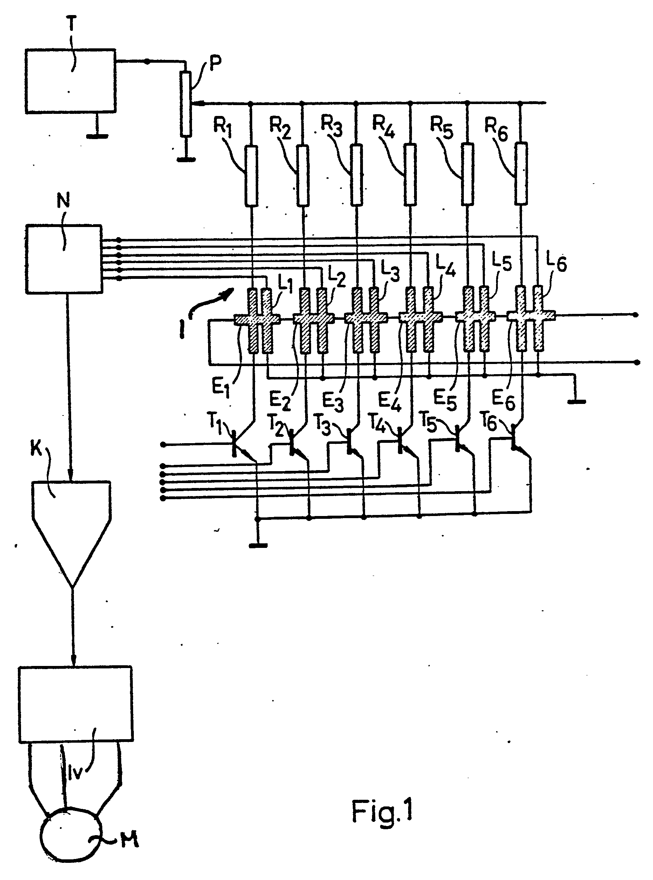

The circuit arrangement of Figure 1 contains six pulse-width modulators I which are similar to each other as regards the arrangement of their components. Therefore the same reference letters have been used to designate these components but with their numerical suffixes increasing. The slider of the potentiometer P is connected to a common or united terminal of the resistors $R_1$ to

$R_6$. The emitters of the transistors $T_1$ to $T_6$ are all earthed. The biasing coils $E_1$ to $E_6$ are coupled in series to receive the same current signal.

The output terminals of the pulse transformers $L_1$ to $L_6$ are connected to respective inputs of a NAND-gate N.

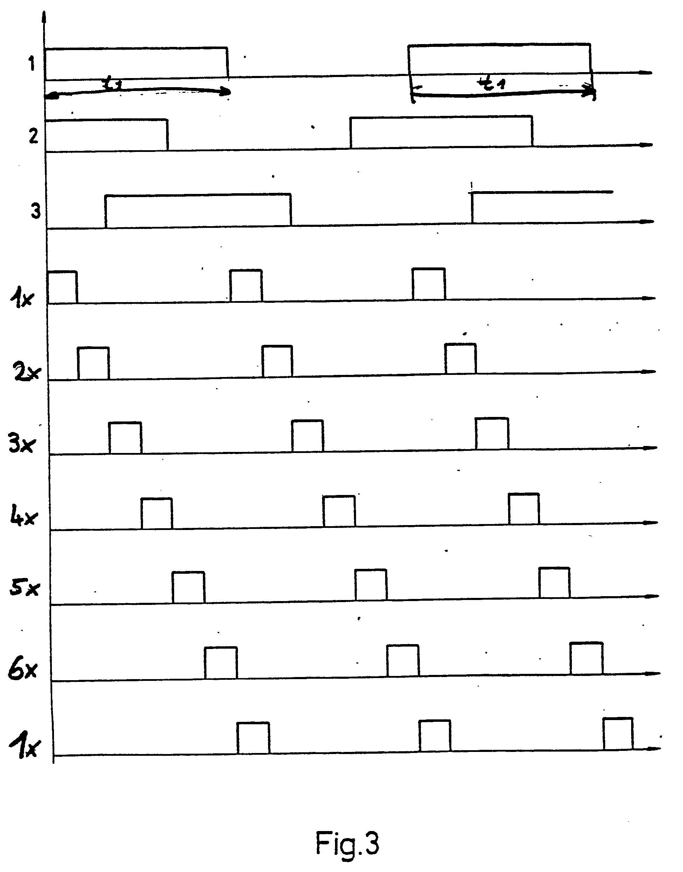

The bases of transistors $T_1$ to $T_6$ are driven by timing pulses with waveforms and sequence as shown in Figure 3, as will be explained below.

The output of the NAND-gate N is connected to the input of an amplifier K operating in switching mode, the output of which is connected to the control input of an inverter circuit $I_v$.

The values of the resistors $R_1$, $R_2$...$R_6$ may be selected so that they correspond to respective and consecutive discrete points of a sinusoidal waveform. Alternatively, the values of the resistors may be equal and instead the inductance values of the primary coils of the pulse transformers are chosen to correspond to points of the said waveform. What matters is· that the time constant $R_i/L_i$ of a given pulse-width modulator should represent a point on the sinusoidal waveform.

Figure 2 illustrates a motor drive in which the three-phase motor M is driven by the inverter $I_v$. The three-phase control inputs of the inverter $I_v$ are connected to respective circuits each of which comprises a pulse-width modulator I, a buffer E and the amplifier K. The buffer E takes the place of the NAND-gate N in Figure 1 because each pulse-width modulator I has, of course, only one output.

For the sake of simplicity, only one modulator I is shown connected to the supply unit T. For the same reason, a three-phase pulse generator H, with output waveforms designated by 1, 2 and 3 at the top of Figure 3, is shown with respective phase lines coupled to the respective first inputs of AND-gates.

As is well known in the art, the periodic time $2t_1$ (Figure 3) of the pulses from generator H controls the r.p.m. of the motor M.

The second input of each AND-gate is connected to respective clock generators $J_1$, $J_2$, $J_3$. The output signals of one of the clock generators $J_1$ associated with the first phase are illustrated in Figure 3, and are designated by $1_x$ to $6_x$. It should be noted that the pulses $1_x$ to $6_x$ do not overlap and substantially fill the ON periods of the associated phase signal 1 of the generator H.

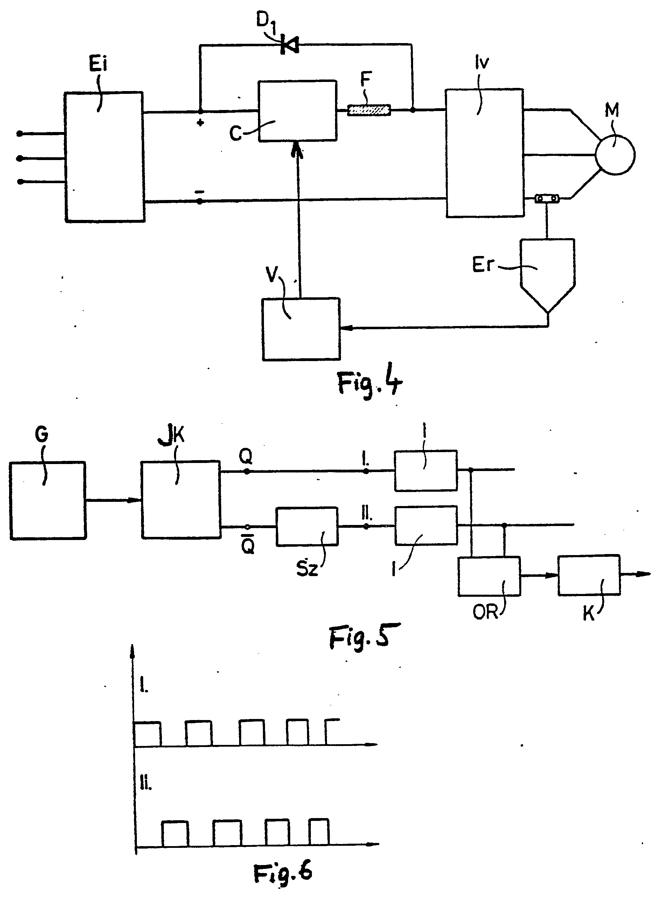

So far, a description of the commutation control of the inverter $I_v$ has been given. In Figure 4, there is shown heavy-current DC supply arrangement for the inverter $I_v$. This arrangement includes a mains rectifier $E_i$ to which are connected the three phases of the mains supply. The DC outputs of the rectifier $E_i$ are connected to the input of a controlled chopper C the output of which is connected via a choke-coil F to one heavy-current input of the inverter $I_v$. A feedback line containing a diode $D_1$ is connected between the inverter $I_v$ and the positive output of the rectifier Ei. The output signal of a circuit V is connected to the control input of the chopper C and receives an input from an amplifier Er, fed by a current transformer inserted in an output line of the inverter $I_v$. The circuit V is shown in greater detail in Figure 5.

Referring now to Figure 5, there is shown a clock generator G connected to the input of a flip-flop circuit JK. The non-inverted output Q of the flip-flop circuit is connected to the control input of the pulse-width modulator I according to Figure 1. The output of said modulator is connected via an OR-gate and the amplifier K to the control input of the chopper C. The inverted output $\bar{Q}$ is coupled via a phase reversal unit Sz and another pulse width modulator I to another input of the OR-gate.

As is well known to those skilled in the art, the heavy current DC voltage supplying an inverter that controls a squirrel-cage motor should vary linearly with the frequency that determines the motor r.p.m., at least over a large initial section of the possible motor speed adjustment range.

It is also known that at a given r.p.m. an increase in motor load necessitates an increase in the torque of the motor.

It will now be explained how the illustrated embodiment achieves these criteria.

Let us consider the effect of the pulse train I of Figure 6 on the output of the pulse-width modulator I. The ON period of each pulse triggers a transient switching process of an energy-free series RL member in which the L member is the primary coil·of pulse transformer $L_1$. Initially, the current rises practically linearly and then approximates asymptotically to a constant value. While the core remains unsaturated, the secondary voltage corresponds to the differential of the primary current with time. Suppose that the time-constant of the RL member is substantially higher than the width of the pulse I; then the duration of the secondary voltage equals that of the exciting pulse. However, when the generally linear increase of the primary current reaches a value which saturates the core, the secondary voltage drops immediately to zero owing to the disappearance of magnetic coupling.

During the existence of the secondary output voltage pulse the control input of chopper C keeps the chopper C ON. After termination of this output voltage pulse no control voltage is passed to the chopper C and it switches OFF.

The ON periods of the chopper C fully correspond to the duration of the presence of the secondary voltage pulses, since the OR-gate ensures that the two pulse width modulators (Figure 5) operate alternately. The ratio of the input voltage to the effective output voltage of the chopper C equals the ratio of the periodic time of the control pulses I, II to the duration of the existence of the secondary voltage pulse.

If the motor load increases, the current passed through the biasing coil $E_1$ (Figure 1) of the pulse transformer $L_1$ increases proportionately. Consequently, by a suitable choice of sign (sense) of current flow, the cure becomes saturated at a higher value of the primary current than would be the case without this increased reversed bias, whereby the output pulse will be wider, the duty cycle increases and so does the effective voltage driving the motor M; thus the torque increases to match the increased load.

If it is desired to reduce the speed of the motor M, e.g. to one half of its previous value, the periodic time of the control pulses 1, 2 and 3 of Figure 3 to the inverter I$_v$ should be increased correspondingly, e.g. doubled. This change involves the doubling of the length of pulses I in Figure 6; however, all the characteristics (e.g. time-constant) of the pulse-width modulator I remain unchanged. The output voltage pulse will therefore have the same duration as it was when the motor M rotated at the previous higher speed, but the ratio of duration of the output pulse to that of the exciting pulse will decrease correspondingly. The resulting decrease in the duty cycle of the chopper C reduces the effective voltage applied to the motor M. On the other hand, if the motor speed is increased, an increase in the effective voltage at the input of the inverter I$_v$ occurs.

So far it has been explained how the effective heavy current DC voltage is controlled by using the pulse-width modulator I. Analogously, the effective length of the control pulses passed to the three control inputs of the invert Iv can be regulated by means of the circuit arrangement of Figure 2. In each phase control line, the control pulses of generator H are gated by the pulse train of the corresponding one of the clock generators J1 to J3. The pulse-width modulators I in each phase line assure that the duty cycles of their output pulses linearly vary with varying motor speed and react when the load is varied.

In a further embodiment of the kind of control, an approximately sinusoidal control signal can be generated if, instead of a single pulse-width modulator I in the respective phase lines, a number, e.g. six, pulse-width modulators I are used and excited separately and sequentially by the pulses shown in Figure 3 at 1x to 6x. The quasi-sinusoidal control voltage results in a smoother run of the motor, which is desirable particularly for slower speeds.

## Claims

1. A circuit arrangement for an asynchronous motor drive, including a DC voltage source (Ei), a controllable chopper (C), a three-phase inverter (Iv) with respective phase control inputs and a DC input coupled to said source by the chopper (C) for driving the motor (M), a three-phase pulse generator (H) generating control pulses for the inverter (Iv), transducer means for supplying a signal proportional to the motor current, and a circuit including a pulse-width modulator (I) controlled by said signal for at least partially compensating the torque of the motor (M) if the load is varied and for adjusting the effective supply of the motor (M) if the frequency is varied by varying the input parameters of the inverter (Iv), characterised in that said pulse-width modulator (I) includes a resistor (R1), a pulse transformer (L1) and a controlled semiconductor switch (T1); and in that said transformer (L1) consists of a primary coil connected between said resistor (R1) and said switch (T1), a secondary coil and a biasing coil (E1), said coils being wound around a saturable core; said biasing coil (E1) being fed by said current signal, a clock (J1 to J3, G) delivering pulses forming portions of said control pulses for said switch (T1), the control input of the chopper (c) and/or the phase control input(s) of the inverter (Iv) being coupled to the secondary coil of the pulse transformer (L1).

2. A circuit arrangement as claimed in claim 1, characterised in that respective pulse-width modulators (I) are coupled to every phase control input of the inverter (Iv).

3. A circuit arrangement as claimed in claim 2, characterised in that three AND gates are used to provide gated control signals for each of said switches, first inputs of said AND gates being connected to said pulse generator (H) and second inputs thereof being connected to separate clock generators (J1, J2, J3) associated with respective phases.

4. A circuit arrangement as claimed in any preceding claim characterised in that a pair of pulse-width modulators (I), driven by clock pulses that do not overlap, is gated to control said chopper (C).

5. A circuit arrangement as claimed in claim 2 characterised in that every phase control input path of the inverter (Iv) contains a plurality of said pulse-width modulators (I) having different respective time-constants defined by the resistance value of said resistor (R1 to R6) and the inductance value of said primary coil, the time-constants forming a series of values corresponding to values of a sine function and every secondary coil associated with a phase line is connected to respective inputs of a NAND gate (N).

6. A circuit arrangement as claimed in any preceding claim characterised in that signal-forming means (E, K) are inserted in the path of said pulse-width modulator(s) (I).

7. A circuit arrangement as claimed in any preceding claim characterised in that an adjustable DC voltage is applied to the series path of said pulse-width modulators (I).

## Patentansprüche

1. Schaltungsanordnung für einen Asynchronmotorantrieb (M) mit einer Gleichstrom-Spannungsquelle (Ei), einem steuerbaren Zerhacker (C), einem Dreiphasen-Inverter (Iv) mit entsprechenden Phasensteuereingängen und einen Gleichspannungseingange, der mit der Spannungsquelle zum Antreiben des Motors (M) über der Zerhacker (C) verbunden ist, einem Steuerimpulse für den Inverter (Iv) erzeugenden Dreiphasenpulsgenerator (H), einem Umformer zum Liefern eines zu dem Motorstrom proportionalen Signals und einer Schaltung, die einem mit diesem Signal gesteuerten Pulsbreitenmodulator enthält, von dem das Drehmoment des Motors (M) bei sich ändernder Belastung wenigstens teilweise kompensiert wird und der effektive Speisestrom des Motors (M) bei Frequenzänderungen durch Ändern der Eingangsparameter des Inverters Iv eingestellt wird, dadurch gekennzeichnet, daß der Pulsbreitenmodulator (I) einen Widerstand (R1), einen Pulsumformer (L1) und einen gesteuerten Halbleiterschalter (D1) enthält und daß der Pulsumformer (L1) eine zwischen dem Widerstand (R1) und dem Schalter (T1) eingeschaltete Primärspule, eine Sekundärspule und eine Vormagnetisierungsspule (E1) aufweist, wobei die Spulen auf einem sättigungsfähigen Kern gewickelt sind und die Vormagnetisierungsspule (E1) mit dem Stromsignal gespeist wird und ein Teil der Steuerimpulse für den Schalter (T1) bildende Impulse liefernder Taktgeber (J1 bis J3, G) vorgesehen ist, und der Steuereingang des Zerhackers (C) und/oder der Phasensteuereingang oder die Steuereingänge des Inverters (IV) mit der zweiten Spule des Pulsumformers (L1) gekoppelt ist.

2. Schaltungsanordnung nach Anspruch 1, dadurch gekennzeichnet, daß entsprechende Pulsbreitenmodulatoren (I) mit jedem Phasensteuereingang des Inverters (Iv) gekoppelt sind.

3. Schaltungsanordnung nach Anspruch 2, dadurch gekennzeichnet, daß drei UND-Tore zur Erzeugung von gegatterten Signalen für jeden der Schalter vorgesehen sind, wobei erste Eingänge der UND-Tore an den Impulsgenerators (H) und zweite Eingänge derselben an gesonderte, jeweils entsprechenden Phasen zugeordneten Taktgeber (J1, J2 und J3) angeschlossen sind.

4. Schaltungsanordnung nach einem der Ansprüche 1 bis 3, dadurch gekennzeichnet, daß ein von einander nicht überlappenden Taktimpulsen angetriebenes Paar von Pulsbreitenmodulatoren (I) zur Steuern des Zerhackers (C) gegattert ist.

5. Schaltungsanordnung nach Anspruch 2, dadurch gekennzeichnet, daß jede Phasensteuer-Eingang des Inverters (Iv) mehrerer Pulsbreitenmodulatoren (I) enthält, die von dem Widerstandswert des Widerstandes (R1 bis R6) und dem Induktivitätswert der Primärspule bestimmte unterschiedliche Zeitkonstanten haben, wobei die Zeitkonstanten eine den Werten einer Sinusfunktion entsprechende Wertfolge darstellen und jede einer Phasenleitung zugeordnete Sekundärspule an entsprechende Eingänge eines NAND-Tors (N) geschaltet ist.

6. Schaltungsanordnung nach einem der Ansprüche 1 bis 5, dadurch gekennzeichnet, daß ein Signalumformer (E, K) in den Zweig des Pulsbreitenmodulators (I) eingeschaltet ist.

7. Schaltungsanordnung nach einem der Ansprüche 1 bis 6, dadurch gekennzeichnet, daß eine einstellbare Gleichspannung an den Reihenzweig der Pulsdauermodulatoren (I) angelegt ist.

## Revendications

1. Un agencement de circuit pour le pilotage d'un moteur asynchrone, comprenant une source de tension continue ($E_i$), un hacheur pouvant être commandé (C), un onduleur triphasé ($I_v$) comportant des entrées de commande de phase respectives et une entrée de courant continu reliée à ladite source par le hacheur (C) pour assurer le pilotage du moteur (M), un générateur d'impulsions triphasé (H) produisant des impulsions de commande de l'onduleur ($I_v$), un transducteur pour fournir un signal proportionnel au courant de moteur et un circuit comprenant un modulateur de largeur d'impulsion (I) commandé par ledit signal en vue de compenser, au moins partiellement, le couple du moteur (M) si la charge est modifiée et de régler l'alimentation efficace du moteur (M) si la fréquence est modifiée en faisant varier les paramètres d'entrée de l'onduleur ($I_v$), caractérisé en ce que ledit modulateur de largeur d'impulsion (I) comprend une résistance ($R_1$), un transformateur d'impulsions ($L_1$) et un commutateur semi-conducteur commandé ($T_1$) et en ce que ledit transformateur ($L_1$) se compose d'un enroulement primaire branché entre ladite résistance ($R_1$) et ledit commutateur ($T_1$), d'un enroulement secondaire et d'un enroulement de polarisation ($E_1$), lesdits enroulements étant bobinés autour d'un noyau saturable; ledit enroulement de polarisation ($E_1$) recevant ledit signal de courant, un générateur d'impulsions d'horloge (J1 à J3, G) produisant des impulsions formant des parties desdites impulsions de commande dudit commutateur ($T_1$), l'entrée de commande de hacheur (C) et/ou la ou les entrée(s) de commande de phase de l'onduleur ($I_v$) étant reliées à l'enroulement secondaire du transformateur d'impulsion ($L_1$).

2. Un agencement de circuit tel que revendiqué dans la revendication 1, caractérisé en ce que les modulateurs de largeur d'impulsion respectifs (I) sont reliés à chaque entrée de commande de phase de l'onduleur ($I_v$).

3. Un agencement de circuit tel que revendiqué dans la revendication 2, caractérisé en ce que trois portes ET sont utilisées pour fournir des signaux de commande à chacun desdits commutateurs, les premières entrées desdites portes ET étant reliées audit générateur d'impulsions (H) et leurs secondes entrées étant reliées à des générateurs d'impulsions d'horloge séparés (J1, J2, J3) associés à des phases respectives.

4. Un agencement de circuit tel que revendiqué dans l'une quelconque des revendications précédentes, caractérisé en ce qu'une paire de modulateurs de largeur d'impulsion (I), excitée par des impulsions d'horloge qui ne se chevauchent pas, est pilotée pour commander ledit hacheur (C).

5. Un agencement de circuit tel que revendiqué dans la revendication 2, caractérisé en ce que chaque voie d'entrée de commande de phase de

l'onduleur ($I_v$) contient une pluralité desdits modulateurs de largeur d'impulsion (I) ayant des constantes de temps respectives différentes qui sont définis par la valeur ohmique de ladite résistance ($R_1$ à $R_6$) et la valeur d'inductance dudit enroulement primaire, les constantes de temps formant une série de valeurs correspondant aux valeurs d'une fonction sinusoïdale et en ce que chaque enroulement secondaire, associé à une ligne de phase, est relié à des entrées respectives d'une porte NON-ET (N).

6. Un agencement de circuit tel que revendiqué dans l'une quelconque des revendications précédentes, caractérisé en ce que moyens de formation de signaux (E, K) sont insérés dans la voie desdits modulateurs de largeur d'impulsion (I).

7. Un agencement de circuit tel que revendiqué dans l'une quelconque des revendications précédentes, caractérisé en ce qu'une tension continue réglabe est appliquée à la voie en série desdits modulateurs de largeur d'impulsion (I).

Fig.1

0 035 615

Fig.2

Fig.3

Fig. 4

Fig. 5

Fig. 6